# EUROPEAN PATENT SPECIFICATION

(11) **EP 2 863 069 B1**
(45) Date of publication and mention of the grant of the patent: **13.12.2017**
(21) Application number: 14199298.2
(22) Date of filing: 12.09.2012
(51) Int. Cl.: F15B 13/04, F15B 20/00

(54) **Rotary control valve**
Drehbares Steuerventil
Vanne de commande rotative

(30) Priority: 28.09.2011 GB 201116679
(43) Date of publication of application: 22.04.2015
(62) Divisional of application: 12184132.4
(73) Proprietor: Goodrich Actuation Systems SAS, 78530 Buc (FR)
(72) Inventor: Herveux, Arnauld Roger Edmond, 78000 Versailles (FR); Donadille, Laurent Patrice, 78320 Levis Saint Nom (FR)
(74) Representative: Hall, Matthew Benjamin

(56) References cited:
- US-A- 4 290 452
- US-A- 4 335 745
- US-A- 4 858 650

## Description

This invention relates to a rotary control valve, for example to a rotary control valve suitable for use in controlling the supply of fluid under pressure to an actuator and thereby control the operation of the actuator.

Where the function of an actuator is critical to safety, it is well known to incorporate redundancy into the system in which the actuator is used so as to accommodate failures within the actuator or associated control system without preventing operation of the system.

One form of valve suitable for use in controlling the operation of such an actuator takes the form of a linear control valve. In order to permit the provision of the required degree of redundancy in the event of the linear control valve becoming jammed, a separate by-pass valve arrangement is provided to permit the valve outlets to be connected to one another and so permit the associated actuator to be moved by an external device or under the control of another valve to a desired position. An alternative valve suitable for use in this type of application is a rotary valve comprising a pair of spools arranged concentrically within a sleeve. In normal use, angular movement of one of the spools relative to the other spool is used to control the delivery of fluid to the actuator. In the event that the spools become jammed so that such relative movement is no longer possible, adjustment of the angular position of the second spool relative to the sleeve can be used to achieve the desired level of control to permit continued operation.

US 4,335,745 discloses a hydraulic distributor which permits transfer of hydraulic fluid in the event of accidental seizure of a central rotary plug.

Control valves of the types described hereinbefore are typically of relatively large form and so may be difficult to accommodate in applications in which space is limited, such as in many aerospace applications. Furthermore, the control valves are typically relatively complex and undesirably heavy.

It is an object of the invention to provide a control valve in which at least some of the disadvantages associated with known control valves are overcome or are of reduced effect.

According to the present invention there is provided a control valve as recited in claim 1, comprising a first spool, a second spool encircling at least part of the first spool and angularly moveable relative thereto, and a sleeve encircling at least part of the second spool, the second spool being angularly moveable relative to the sleeve, the first and second spools having first and second series of ports registrable with one another, depending upon the relative angular positions of the first and second spools, to control communication between at least a pressure line, a return line and a control line provided in or connected to the sleeve, the second spool and the sleeve having third and fourth series of ports, axially spaced from the first and second series of ports and registrable with one another, depending upon the relative angular positions of the second spool and the sleeve, to control communication between at least the control line and the return line, and latch means operable to resist movement of the second spool relative to the sleeve.

In such an arrangement, in normal use, the second spool is held against angular movement relative to the sleeve by the latch means and angular movement of the first spool relative to the second spool controls communication between at least some of the ports of the first and second series of ports, and thus the pressure line, the return line and the control line. By appropriate control over the position of the first spool relative to the second spool, an actuator connected to the control line can be controlled. In the event of the first and second spools becoming jammed to one another, angular movement of the first spool can also result in angular movement of the second spool by virtue of these components being jammed to one another, provided the applied torque is sufficient to overcome the action of the latch means. The movement of the second spool allows communication to be established between the ports of the third and fourth series of ports so as to establish communication between the control line and the return line. The establishment of such communication provides a by-pass arrangement. The incorporation of a by-pass arrangement into a rotary control valve in this manner allows the required provision of redundancy without excessively increasing the size and weight of the control valve and in a relatively simple and convenient form.

Preferably, the latch means comprises a formation provided on the second spool, the formation including a recess, a latch element cooperating with the formation and being urged into the recess to resist angular movement of the second spool. Conveniently the latch element is spring biased towards the recess. The recess is preferably of symmetrical, ramped form.

Preferably first and second control lines are provided, the establishment of communication between the ports of the first and second series of ports providing communication between one of the control lines and the pressure line and providing communication between the other of the control lines and the return line. Preferably the establishment of communication between the ports of the third and fourth series of ports connects both the first control line and the second control line to the return line.

Conveniently a pair of rotary control valves of this type are used in combination in controlling the operation of the actuator. In the event of a jam within one of the valves, that valve can be moved to its by-pass position allowing the actuator to continue to operate under the control of the other of the control valves. It will be appreciated that although the operation of the actuator may be degraded, it can continue to function, the control valve in the by-pass position acting as a damper which damps actuator movement but does not prevent it.

The control valves are preferably driven synchronously, the jammed control valve occupying its by-pass position at any time that the still functioning valve establishes communication between the control line(s) and the pressure line and/or return line.

The invention will further be described, by way of example, with reference to the accompanying drawings, in which:
Figure 1 is a diagram illustrating an actuator and rotary control valve arrangement controlling the operation thereof;
Figure 2 is a perspective view illustrating part of a rotary control valve used in the arrangement of Figure 1;
Figure 3 is a side view of part of the rotary control valve shown in Figure 2;
Figures 4, 5 and 6 are sectional views along the lines A-A, B-B and C-C, respectively, in Figure 3;
Figures 7 and 8 are perspective views of the first and second spools of the rotary control valve; and
Figures 9a and 9b are perspective views of parts of the sleeve of the rotary control valve.

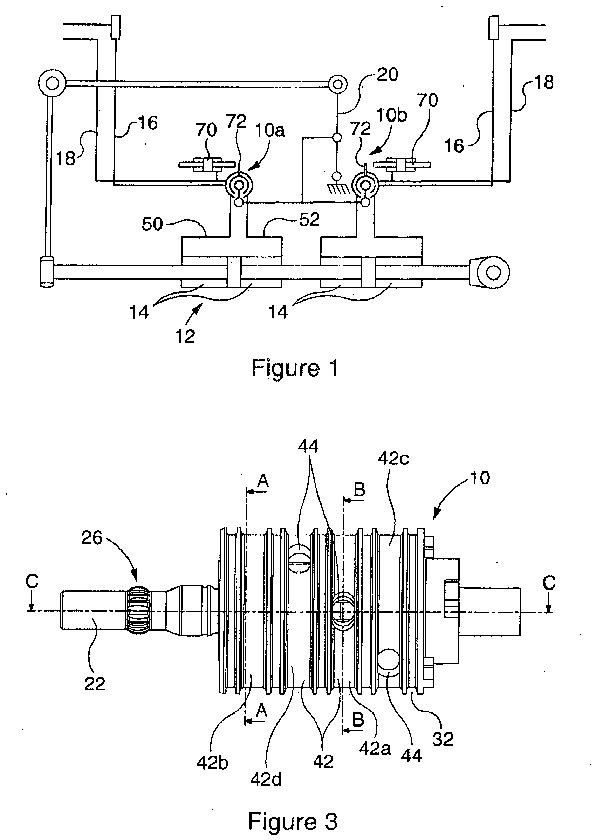

Referring to the accompanying drawings, a rotary control valve 10 is illustrated for use in controlling the operation of a hydraulic or so-called fuel-draulic actuator 12. As shown in Figure 1, a pair of control valves 10a, 10b are conveniently associated with the actuator 12, each control valve 10a, 10b being operable to control the connection of respective pairs of control chambers 14 to a pressure line 16 and to a return line 18. A common drive linkage arrangement 20 is provided to control the operation of the control valves 10a, 10b such that they operate in a synchronised fashion. As described below, in the event of a jam occurring in one of the control valves 10a, 10b, that control valve is able to occupy a by-pass position when adjustment of the actuator position is required, thereby permitting continued use of the actuator 12, albeit in a degraded manner due to the damping effect provided by the jammed control valve.

The control valves 10a, 10b are substantially identical to one another and so only one of the control valves will be described herein in further detail.

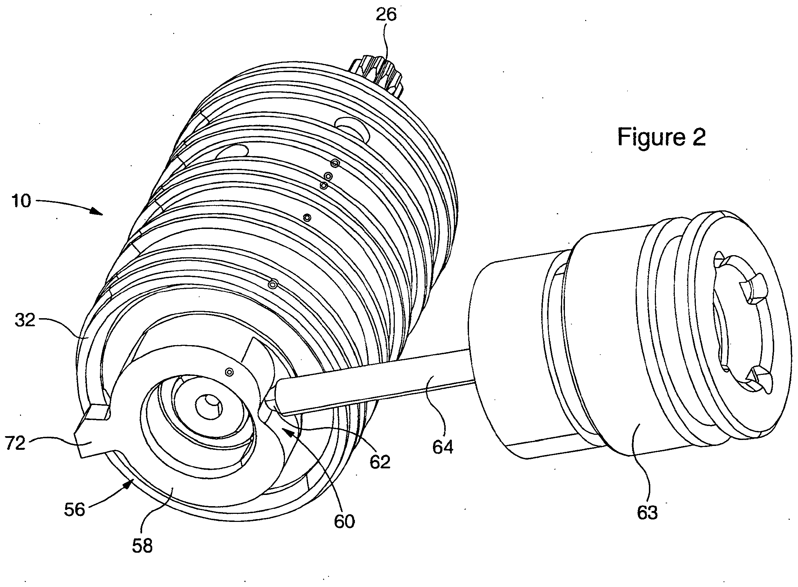

As shown in Figures 2 to 9, the control valve 10 comprises a first, inner spool 22 which extends through a bore formed in a second, outer spool 24 such that the second spool 24 encircles the first spool 22. The first spool 22 includes a region of diameter substantially equal to the diameter of the adjacent part of the bore of the second spool 24 such as to form a reasonably good seal therewith. The first spool 22 is provided, at a part thereof which projects from the second spool 24, with gear teeth or spline formations 26 to allow the associated drive arrangement 20 to drive the first spool 22 for angular movement.

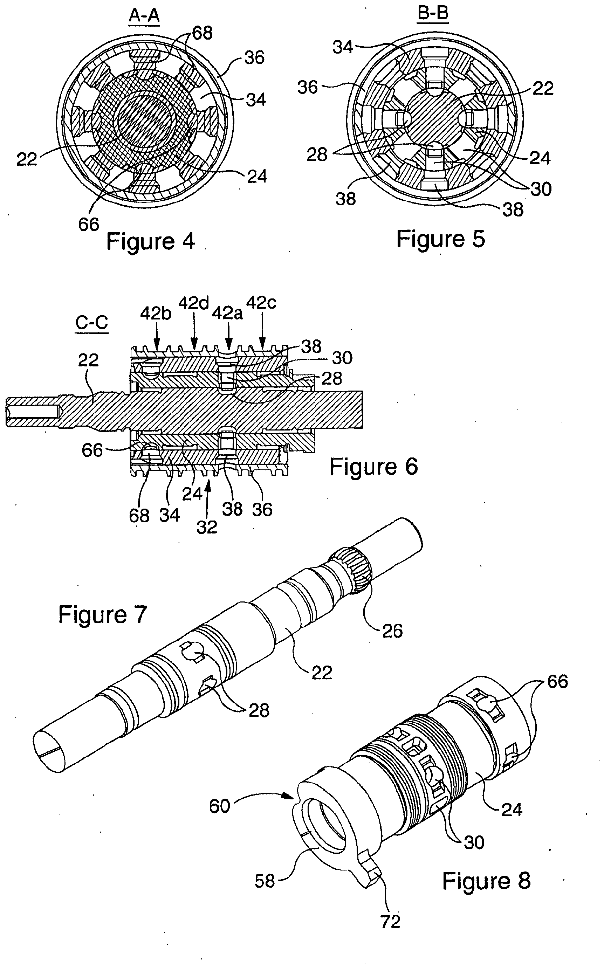

The first spool 22 is provided, on its periphery, with a first series of ports 28 in the form of recesses. The ports 28 are axially aligned with a second series of ports 30 formed in the second spool 24. Unlike the first series of ports 28, the ports 30 take the form of openings extending through the second spool 24. As best shown in Figure 5, four equiangularly spaced ports 28 are provided on the first spool 22, and eight equiangularly spaced ports 30 are provided on the second spool 24. The design and positioning of the ports 28, 30 is such that when the first spool 22 occupies a closed position, each port 28 thereof communicates with just one of the ports 30. Angular movement of the first spool 22 in either direction away from the closed position results in each port 28 registering with a pair of adjacent ones of the ports 30, establishing communication therebetween.

The second spool 24 extends through a central passage formed in a sleeve 32. The sleeve 32 is, for convenience, of two part construction, comprising an inner sleeve 34 and an outer sleeve 36. The inner and outer sleeves 34, 36 are rigidly secured to one another and are not permitted to move relative to one another, in use.

The inner sleeve 34 defines a series of ports 38 which are axially aligned with the ports 28, 30 and, in the position illustrated, are angularly aligned with the ports 30. It will be appreciated, therefore, that when the second spool 24 occupies the angular position illustrated, angular movement of the first spool 22 controls communication between adjacent ones of the ports 38 provided in the inner sleeve 34.

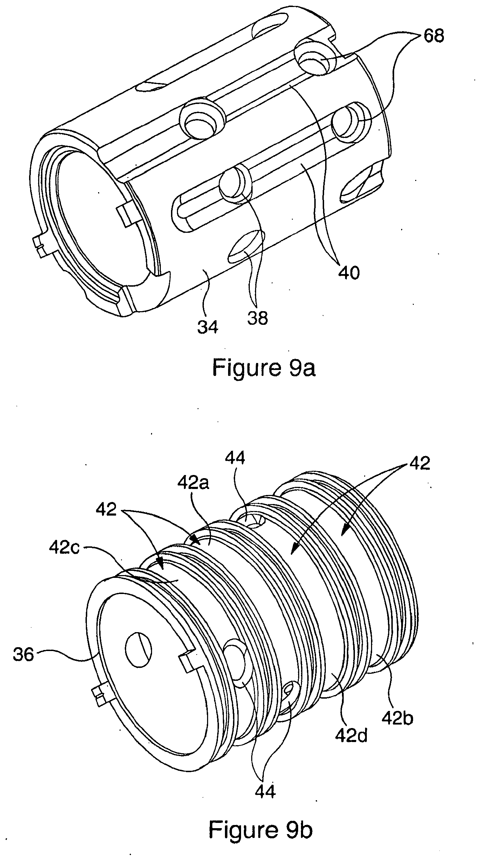

As shown in Figure 9a, the ports 38 extend through the inner sleeve 34. The outer periphery of the inner sleeve 34 is provided with a series of axially extending channels 40 communicating with respective ones of the ports 38. The outer sleeve 36, as shown in Figure 9b, is formed on its outer surface with a series of annular recesses or chambers 42, and each chamber 42a, 42b, 42c, 42d communicates, via respective passages 44 formed in the outer sleeve 36 (two passages 44 in each chamber 42a, 42b, 42c, 42d), with a pair of the channels 40, and hence with a pair of the ports 38. In use, the sleeve 32 is located within a housing (not shown) provided with connections such that a first one of the chambers 42a is connected to the high pressure line 16, a second one of the chambers 42b is connected to the return line 18, a third one of the chambers 42c is connected to a first control line 50 connected to one of the control chambers 14 of the actuator 12, and a fourth one of the chambers 42d is connected to a second control line 52 connected to another of the control chambers 14.

It will be appreciated that with the spools 22, 24 and sleeve 32 in the orientation shown, no high pressure or return connections to the control chambers 14 are made. The actuator 12 is thus held against movement. From this position, angular movement of the first spool 22 in one direction establishes communication between the first chamber 42a and the third chamber 42c, applying high pressure to the first control line 50 and associated control chamber 14, and establishes communication between the second chamber 42b and the fourth chamber 42d, connecting the second control line 52 and the associated control chamber 14 to the return line 18. Movement of the actuator 12 will thus take place, such movement continuing until either the actuator 12 reaches the end of its travel or the control valve is moved to another position. It will be appreciated that movement of the first spool 22 in the opposite direction reverses the connections and so drives the actuator 12 in the opposite direction.

During this mode of operation it is important to ensure that the second spool 24 does not move relative to the sleeve 32 in order to ensure that the communication between the ports 30 of the second spool 24 and the ports 38 of the sleeve 32 is maintained. In order to resist angular movement of the second spool 24 a latch means 56 is provided. The latch means 56 comprises a flange 58 formed on the second spool 24 and provided with a recess 60. As shown in Figure 2, a latch member 62 in the form of a ball element carried by an end of a piston rod 64 is seated in the recess 60. The piston rod 64 is biased by a spring 63 to urge the latch member 62 into the recess 60. Provided the torque applied to the second spool 24, in use, is relatively low, the spring loading applied to the latch member 62, in combination with the shape of the side walls of the recess 60, is sufficient to hold the second spool 24 against angular movement.

In use, if the first and second spools 22, 24 become jammed to one another, it will be appreciated that the continued application of torque to the first spool 22 to drive it to a desired angular position will result in a significant torque loading being applied to the second spool 24. If this applied torque is sufficiently large, angular movement of the second spool 24 may commence driving the second spool 24 towards a by-pass position, the latch member 62 riding up the ramped side walls of the recess 60 against the action of the applied spring loading to achieve such movement.

As shown in Figures 6 and 8, at an axial position spaced from the first and second series of ports 28, 30, the second spool 24 is provided with a third series of ports 66 in the form of recesses provided in the periphery thereof. As shown in Figure 4, four such ports 66 are provided. The ports 66 are axially aligned with a fourth series of ports 68 provided in the sleeve 32. The ports 68 are equiangularly spaced, and eight such ports are provided. Alternate ones of the ports 68 communicate with the channels 40 connected to the chamber 42b, and so are connected to the return line 18. Two opposing ones of the ports 68 communicate with the channels 40 connected to the chamber 42c and so are connected to the first control line 50. The remaining two ports 68 are connected to the channels 40 communicating with the chamber 42d and so are connected to the second control line 52.

When the second spool 24 is in the angular position illustrated, in which it is latched by the latch means 56, it will be appreciated that each port 66 of the third series communicates with just one of the ports 68 of the fourth series. None of the ports 68 communicates via the ports 66 with another of the ports 68. During normal operation of the control valve 10, therefore, these ports 66, 68 and this part of the control valve 10 play no part in the operation of the control valve 10 and so have no effect upon the control or operation of the actuator 12. However, in the event that the first and second spools 22, 24 become jammed and so the second spool 24 is driven for movement, as outlined hereinbefore, after movement of the second spool 24 beyond a predetermined distance, each port 66 will move into communication with two adjacent ones of the ports 68. Consequently, communication will be established between both of the control lines 50, 52 and the return line 18. Depending upon the angular position of the first spool 22 relative to the second spool 24, one or other of the control lines 50, 52 may also be connected to the high pressure line 16, and so some parasitic losses of fuel from the high pressure line 16 to the return line 18 may take place.

It will be appreciated that by connecting both of the control lines 50, 52 to the return line 18, movement of the actuator 12 under the control of, for example, the control valve 10b in the event of a jam within the control valve 10a, may take place without the formation of a hydraulic lock that would otherwise prevent such operation. The failed control valve will damp such movement, but will not prevent it from taking place. Clearly, such damped operation may result in the actuator operating in a degraded condition. However, since the actuator can continue to function, safety is maintained.

As shown in Figure 1, conveniently a test piston 70 is associated with each control valve 10 and is operable to engage a projection 72 formed on the second spool 24 to force the second spool 24 out of its normal operating position and thereby mimic the occurrence of a jam. By appropriate control over the pistons 70, testing of the system and its ability to drive the actuator 12 in the event of a failure can take place. For example, by operation of one of the pistons 70, one of the control valves 10 can be temporarily taken out of service to ensure that the actuator can be driven via the other control valve. After testing of one control valve in this manner, the other control valve can be taken out of service to permit completion of the testing operation.

As described hereinbefore, it will be appreciated that the control valve of the invention is advantageous in that it permits the required degree of redundancy to be provided in a relatively simple and convenient manner, without requiring the provision of additional components. It is relatively compact and so easy to accommodate and adds minimal additional weight. A number of other benefits will be appreciated by a man skilled in the art.

Whilst the description hereinbefore is of one specific embodiment of the invention, it will be appreciated that numerous modifications and alterations may be made without departing from the scope of the invention.

## Claims

1. A rotary control valve comprising a first spool (22), a second spool (24) encircling at least part of the first spool (22) and angularly moveable relative thereto, and a sleeve (32) encircling at least part of the second spool (24), the second spool (24) being angularly moveable relative to the sleeve (32), the first and second spools (22, 24) having first and second series of ports (28, 30) registrable with one another, depending upon the relative angular positions of the first and second spools (22, 24), to control communication between at least a pressure line (16), a return line (18) and a control line (50, 52) provided in or connected to the sleeve (32), and latch means (56) operable to resist movement of the second spool (24) relative to the sleeve (32), **characterised by** the second spool (24) having a third series of ports (66) and the sleeve (32) having a fourth series of ports (68), the third and fourth series of ports being axially spaced from the first and second series of ports (28, 30) and registrable with one another, depending upon the relative angular positions of the second spool (24) and the sleeve (32), to control communication between at least the control line (50, 52) and the return line (18).

2. A valve according to Claim 1, wherein the latch means (56) comprises a formation provided on the second spool (24), the formation including a recess (60), a latch element (62) cooperating with the formation and being urged into the recess (60) to resist angular movement of the second spool (24).

3. A valve according to Claim 2, wherein the latch element (62) is spring biased towards the recess (60).

4. A valve according to Claim 2 or Claim 3, wherein the recess (60) is of symmetrical, ramped form.

5. A valve according to any of the preceding claims, wherein first and second control lines (50, 52) are provided, the establishment of communication between the ports of the first and second series of ports (28, 30) providing communication between one of the control lines (50, 52) and the pressure line (16) and providing communication between the other of the control lines (50, 52) and the return line (18).

6. A valve according to Claim 5, wherein the establishment of communication between the ports of the third and fourth series of ports (66, 68) connects both the first control line (50) and the second control line (52) to the return line (18).

7. A valve according to claim 6, wherein:
the sleeve (32) comprises an inner sleeve (34) and an outer sleeve (36), the inner and outer sleeves being rigidly secured to one another;
the inner sleeve defines a fifth series of ports (38) which extend through the inner sleeve and are axially aligned with the first (28) and second series of ports, such that when the fifth series of ports are angularly aligned with the second series of ports, angular movement of the first spool (22) controls communication between adjacent ones of the fifth series of ports;
the outer periphery of the inner sleeve (34) is provided with a series of axially extending channels (40) communicating with respective ones of the fifth series of ports, the outer surface of the outer sleeve (36) is provided with a series of annular chambers (42), each of which communicates via passages (44) formed in the outer sleeve with a pair of channels (40) and hence with a pair of ports (38);
there are two passages (44) in each chamber (42); and
a first one (42a) of the chambers (42) is connected to the high pressure line (16), a second one (42b) of the chambers (42) is connected to the return line (18), a third one (42c) of the chambers (42) is connected to the first control line (50), and a fourth one (42d) of the chambers (42) is connected to the second control line (52).

8. A valve according to claim 7, wherein:
the third series of ports (66) are provided in the form of four recesses provided in the periphery of the second spool (24), axially aligned with the fourth series of ports (68);
the fourth series of ports (68) are provided in the sleeve (32) in the form of eight equiangularly spaced ports; and
alternate ones of the fourth series of ports (68) communicate with the channels (40) connected to the second chamber (42b) and so are connected to the return line (18), two opposing ones of the fourth series of ports (68) communicate with the channels (40) connected to the third chamber (42c) and so are connected to the first control line (50), and the remaining two ports of the fourth series of ports (68) are connected to the channels (40) communicating with the fourth chamber (42d) and so are connected to the second control line (52).

9. A valve according to claim 8, wherein the valve is arranged so that in the event the first and second spools (22, 24) become jammed, the second spool is driven for movement and each port of the third series of ports (66) is moved into communication with two adjacent ones of the ports of the fourth series of ports (68), to establish communication between both of the control lines (50, 52) and the return line (18).

## Patentansprüche

1. Drehbares Steuerventil, umfassend einen ersten Schieber (22), einen zweiten Schieber (24), der mindestens einen Teil des ersten Schiebers (22) umgibt und relativ zu diesem winkelbeweglich ist, und eine Hülse (32), die mindestens einen Teil des zweiten Schiebers (24) umgibt, wobei der zweite Schieber (24) relativ zur Hülse (32) winkelbeweglich ist, wobei der erste und der zweite Schieber (22, 24) eine erste und eine zweite Reihe von Öffnungen (28, 30) aufweisen, die abhängig von den relativen Winkelpositionen des ersten und des zweiten Schiebers (22, 24) aufeinander ausgerichtet werden können, um die Kommunikation zwischen mindestens einer Druckleitung (16), einer Rückleitung (18) und einer Steuerleitung (50, 52) zu steuern, die in oder in Verbindung mit der Hülse (32) vorgesehen sind, und ein Verriegelungsmittel (56), das betätigbar ist, um der Bewegung des zweiten Schiebers (24) relativ zur Hülse (32) zu widerstehen, **dadurch gekennzeichnet, dass** der zweite Schieber (24) eine dritte Reihe von Öffnungen (66) aufweist und die Hülse (32) eine vierte Reihe von Öffnungen (68) aufweist, wobei die dritte und die vierte Reihe von Öffnungen axial von der ersten und der zweiten Reihe von Öffnungen (28, 30) beabstandet sind und abhängig von den relativen Winkelpositionen des zweiten Schiebers (24) und der Hülse (32) aufeinander ausgerichtet werden können, um die Kommunikation zwischen mindestens der Steuerleitung (50, 52) und der Rückleitung (18) zu steuern.

2. Ventil nach Anspruch 1, wobei das Verriegelungsmittel (56) eine Struktur umfasst, die auf dem zweiten Schieber (24) vorgesehen ist, wobei diese Struktur eine Aussparung (60) umfasst, wobei ein Verriegelungselement (62) mit der Struktur zusammenwirkt und in die Aussparung (60) gedrängt wird, um der Winkelbewegung des zweiten Schiebers (24) zu widerstehen.

3. Ventil nach Anspruch 2, wobei das Verriegelungselement (62) gegenüber der Aussparung (60) mit einer Feder vorgespannt ist.

4. Ventil nach Anspruch 2 oder 3, wobei die Aussparung (60) eine symmetrische, abgeschrägte Form aufweist.

5. Ventil nach einem der vorstehenden Ansprüche, wobei eine erste und eine zweite Steuerleitung (50, 52) vorgesehen sind, wobei das Herstellen der Kommunikation zwischen den Öffnungen der ersten und der zweiten Reihe von Öffnungen (28, 30) die Kommunikation zwischen einer der Steuerleitungen (50, 52) und der Druckleitung (16) vorsieht und die Kommunikation zwischen der anderen der Steuerleitungen (50, 52) und der Rückleitung (18) vorsieht.

6. Ventil nach Anspruch 5, wobei das Herstellen der Kommunikation zwischen den Öffnungen der dritten und der vierten Reihe von Öffnungen (66, 68) sowohl die erste Steuerleitung (50) als auch die zweite Steuerleitung (52) mit der Rückleitung (18) verbindet.

7. Ventil nach Anspruch 6, wobei:
die Hülse (32) eine innere Hülse (34) und eine äußere Hülse (36) umfasst, wobei die innere und die äußere Hülse starr aneinander befestigt sind;
die innere Hülse eine fünfte Reihe von Öffnungen (38) umgrenzt, die sich durch die innere Hülse erstrecken und axial auf die erste (28) und die zweite Reihe von Öffnungen ausgerichtet sind, so dass, wenn die fünfte Reihe von Öffnungen winklig mit der zweiten Reihe von Öffnungen ausgerichtet ist, die Winkelbewegung des ersten Schiebers (22) die Kommunikation zwischen benachbarten Öffnungen der fünften Reihe von Öffnungen steuert;
der äußere Umfang der inneren Hülse (34) mit einer Reihe von axial verlaufenden Kanälen (40) vorgesehen ist, die mit entsprechenden Öffnungen der fünften Reihe von Öffnungen kommunizieren, die Außenfläche der äußeren Hülse (36) mit einer Reihe von ringförmigen Kammern (42) vorgesehen ist, von denen jede über Durchgänge (44), die in der äußeren Hülse ausgebildet sind, mit einem Paar von Kanälen (40) und somit mit einem Paar von Öffnungen (38) kommuniziert;
in jeder Kammer (42) zwei Durchgänge (44) vorhanden sind; und
eine erste (42a) der Kammern (42) mit der Hochdruckleitung (16) verbunden ist, eine zweite (42b) der Kammern (42) mit der Rückleitung (18) verbunden ist, eine dritte (42c) der Kammern (42) mit der ersten Steuerleitung (50) verbunden ist und eine vierte (42d) der Kammern (42) mit der zweiten Steuerleitung (52) verbunden ist.

8. Ventil nach Anspruch 7, wobei:
die dritte Reihe von Öffnungen (66) in Form von vier Aussparungen vorgesehen ist, die im Umfang des zweiten Schiebers (24) vorgesehen sind, und axial mit der vierten Reihe von Öffnungen (68) ausgerichtet ist;
die vierte Reihe von Öffnungen (68) in der Hülse (32) in Form von acht gleichwinkelig beabstandeten Öffnungen vorgesehen ist; und
alternierende Öffnungen der vierten Reihe von Öffnungen (68) mit den Kanälen (40) kommunizieren, die mit der zweiten Kammer (42b) verbunden sind, und daher mit der Rückleitung (18) verbunden sind, zwei gegenüberliegende Öffnungen der vierten Reihe von Öffnungen (68) mit den Kanälen (40) kommunizieren, die mit der dritten Kammer (42c) verbunden sind, und daher mit der ersten Steuerleitung (50) verbunden sind, und die verbleibenden beiden Öffnungen der vierten Reihe von Öffnungen (68) mit den Kanälen (40) verbunden sind, die mit der vierten Kammer (42d) kommunizieren, und daher mit der zweiten Steuerleitung (52) verbunden sind.

9. Ventil nach Anspruch 8, wobei das Ventil so angeordnet ist, dass im Fall eines Blockierens des ersten und zweiten Schiebers (22, 24) der zweite Schieber zur Bewegung angetrieben wird und jede Öffnung der dritten Reihe von Öffnungen (66) in Kommunikation mit zwei benachbarten Öffnungen der vierten Reihe von Öffnungen (68) bewegt wird, um eine Kommunikation zwischen beiden Steuerleitungen (50, 52) und der Rückleitung (18) herzustellen.

## Revendications

1. Vanne de commande rotative comprenant une première bobine (22), une seconde bobine (24) encerclant au moins une partie de la première bobine (22) et déplaçable en angle par rapport à celle-ci, et un manchon (32) encerclant au moins une partie de la seconde bobine (24), la seconde bobine (24) étant déplaçable en angle par rapport au manchon (32), la première et la seconde bobines (22, 24) ayant une première et une deuxième série de ports (28, 30) pouvant s'aligner l'une avec l'autre, selon les positions angulaires relatives de la première et de la seconde bobines (22, 24), pour commander la communication entre au moins une ligne de pression (16), et une ligne de retour (18) et une ligne de contrôle (50, 52) fournies dans et connectées au manchon (32), et un moyen de verrou (56) qui fonctionne pour résister au mouvement de la seconde bobine (24) par rapport au manchon (32), **caractérisée par le fait que** la seconde bobine (24) possède une troisième série de ports (66) et le manchon (32) ayant une quatrième série de ports (68), la troisième et la quatrième séries de ports étant axialement espacées de la première et de la deuxième séries de ports (28, 30) et pouvant s'aligner l'une avec l'autre, selon les positions angulaires relatives de la seconde bobine (24) et du manchon (32), pour contrôler la communication entre au moins la ligne de contrôle (50, 52) et la ligne de retour (18).

2. Vanne selon la revendication 1, dans laquelle le moyen de verrou (56) comprend une formation fournie sur la seconde bobine (24), la formation comprenant un évidement (60), un élément de verrou (62) coopérant avec la formation et étant poussé dans l'évidement (60) pour résister au mouvement angulaire de la seconde bobine (24).

3. Vanne selon la revendication 2, dans laquelle l'élément de verrou (62) est sollicité par ressort vers l'évidement (60) .

4. Vanne selon la revendication 2 ou la revendication 3, dans laquelle l'évidement (60) a une forme inclinée, symétrique.

5. Vanne selon l'une quelconque des revendications précédentes, dans laquelle la première et la seconde lignes de commande (50, 52) sont fournies, l'établissement d'une communication entre les ports de la première et de la seconde séries de ports (28, 30) assurant une communication entre l'une des lignes de contrôle (50, 52) et la ligne de pression (16) et assurant une communication entre l'autre des lignes de contrôle (50, 52) et la ligne de retour (18).

6. Vanne selon la revendication 5, dans laquelle l'établissement d'une communication entre les ports de la troisième et de la quatrième séries de ports (66, 68) connecte à la fois la première ligne de contrôle (50) et la seconde ligne de contrôle (52) à la ligne de retour (18).

7. Vanne selon la revendication 6, dans laquelle :
le manchon (32) comprend un manchon interne (34) et un manchon externe (36), les manchons interne et externe étant fixés de façon rigide l'un à l'autre ;
la manchon interne définit une cinquième série de ports (38) qui se prolonge à travers le manchon interne et qui est axialement alignée à la première (28) et la deuxième séries de ports, de sorte que lorsque la cinquième série de ports est alignée en angle avec la deuxième série de ports, un mouvement angulaire de la première bobine (22) contrôle la communication entre les ports adjacents de la cinquième série de ports ;
la périphérie externe du manchon interne (34) est munie d'une série de canaux se prolongeant axialement (40) communiquant avec les ports respectifs de la cinquième série de ports, la surface externe du manchon externe (36) est munie d'une série de chambres annulaires (42), chacune d'entre elles communiquant à travers des passages (44) formés dans le manchon externe avec une paire de canaux (40) et ainsi avec une paire de ports (38) ;
il existe deux passages (44) dans chaque chambre (42) ; et
une première (42a) des chambres (42) est connectée à la ligne à pression élevée (16), une deuxième (42b) des chambres (42) est connectée à la ligne de retour (18), une troisième (42c) des chambres (42) est connectée à la première ligne de contrôle (50), et une quatrième (42d) des chambres (42) est connectée à la seconde ligne de contrôle (52) .

8. Vanne selon la revendication 7, dans laquelle :
la troisième série de ports (66) sont fournis sous la forme de quatre évidements fournis dans la périphérie de la seconde bobine (24), axialement alignés avec la quatrième série de ports (68) ;
la quatrième série de ports (68) est fournie dans le manchon (32) sous la forme de 8 ports espacés de manière équiangulaire ; et
des ports alternés de la quatrième série de ports (68) communiquent avec les canaux (40) connectés à la deuxième chambre (42b) et sont ainsi connectés à la ligne de retour (18), deux ports opposés de la quatrième série de ports (68) communiquent avec les canaux (40) connectés à la troisième chambre (42c) et sont ainsi connectés à la première ligne de contrôle (50), et le restant des deux ports de la quatrième série de ports (68) sont connectés aux canaux (40) communiquant avec la quatrième chambre (42d) et sont ainsi connectés à la seconde ligne de contrôle (52).

9. Vanne selon la revendication 8, dans laquelle la vanne est placée de sorte que dans le cas d'un blocage de la première et de la seconde bobines (22, 24), la seconde bobine est entraînée pour le mouvement et chaque port de la troisième série de ports (66) est déplacé en communication avec deux ports adjacents des ports de la quatrième série de ports (68), pour établir une communication entre à la fois les lignes de contrôle (50, 52) et la ligne de retour (18) .
